# EUROPEAN PATENT APPLICATION

(11) **EP 2 784 969 A1**
(43) Date of publication of application: **01.10.2014**
(21) Application number: 13250046.3
(22) Date of filing: 28.03.2013
(51) Int. Cl.: H04L 5/00, H04M 11/06

(54) **Communications network**

(71) Applicant: British Telecommunications public limited company, London EC1A 7AJ (GB)
(72) Inventor: The designation of the inventor has not yet been filed
(74) Representative: Lau, Chi-Fai

(57) **Abstract**

The present invention provides a method of determining an expected minimum reference margin for each of the plurality of channels in a communications link, for example a DSL link. By comparing this expected minimum reference margin with the current reference margin it is possible to determine if external noise and interference is likely to lead to unacceptable errors or packet losses for one or more of the channels. The number of bits assigned to those channels may be varied to mitigate the effect of the external interference.

## Description

The present invention relates to a communications network and in particular to a communications network using digital subscriber line (DSL) technology.

Asymmetric digital subscriber line (ADSL) systems enable data to be transmitted over a pair of metallic twisted pair (usually copper) wires to customer premises. It is thought that the maximum transmission performance that is likely to be obtained with modern variants of ADSL is a download data rate of 24 Mbps and an upload speed of about 3 Mbps. Such data rates are dependent on the length of the metallic twisted pair from the customer premises to the telephone exchange and thus many customers will receive services at significantly lower data rates.

To improve data rates optical fibre has been installed into the access network. The greatest data rates are likely to be provided using fibre to the premises (FTTP) networks, such as passive optical networks (PONs), but there is a significant cost involved in providing fibre to customer premises. Fibre to the cabinet (FTTCab) networks are known to provide an attractive solution to providing customers with high data rate services without requiring as much investment as FTTP networks. Typically in FTTCab networks, very high bit-rate digital subscriber line (VDSL) systems are used to provide data rates of 40 Mbps and higher, for both upload and download on the metallic twisted pair cables. It is believed that improvements to VDSL systems may provide data rates in excess of 100 Mbps.

DSL systems work by utilising the frequencies above those which are used by the conventional telephony signals. In particular, VDSL2 defines three frequency windows for downstream data and two frequency windows for upstream data. Each of these windows comprises a number of carriers which have a 4.3125 kHz frequency separation. Each of these carriers will transmit one or more symbols with each of these symbols being used to transmit up to 15 bits of data.

During a training process the insertion loss and noise level are determined for each of the carriers such that the signal to noise ratio (SNR) for each carrier can be determined. The SNR value determined the number of symbols which can be transmitted using a given carrier. Thus, the training process determines the capacity of the upstream and downstream links in accordance with the SNRs of each of the carriers.

According to a first aspect of the present invention there is provided a method of operating a communications network, the method comprising the steps of: a) receiving a signal from a communications link, the signal comprising a plurality of channels; b) determining an expected signal to noise ratio (SNR) margin value for each of the plurality of channels; c) measuring the SNR for each of the plurality of channels; and d) generating a correction signal for each channels where the measured SNR value is less than the SNR margin value.

In step b) the expected SNR margin value may be determined on the basis that a single bit is transmitted over each of the plurality of channels. The method may comprise the further step of e) adjusting the expected SNR margin value in accordance with the number of bits transmitted over each of the plurality of channels, wherein step e) is performed after step b) and before step c). The correction signal may be used to vary the expected SNR margin value for the associated channel.

According to a second aspect of the present invention there is provided an apparatus configured, in use, to receive a signal from a communications network, the signal comprising a plurality of channels; determine a signal to noise ratio (SNR) margin value for each of the plurality of channels; measure the SNR for each of the plurality of channels; and generate a correction signal for each channel where the SNR is less than the SNR margin value. The apparatus may comprise customer premises equipment or a Digital Subscriber Line Add/Drop Multiplexor.

According to a third aspect of the present invention there is provided a tangible data carrier for use in a computing device, the data carrier comprising computer executable code which, in use, performs a method as described above.

Embodiments of the present invention will now be described, by way of example only, with reference to the accompanying drawings in which:
Figure 1 shows a schematic depiction of a FTTCab network in which a telephone exchange is connected to a plurality of cabinets by optical fibre cables;
Figure 2 shows a schematic depiction of a DSLAM connected to CPE via a copper cable; and
Figure 3 shows a graphical depiction of a flowchart which describes the operation of a method according to the present invention.

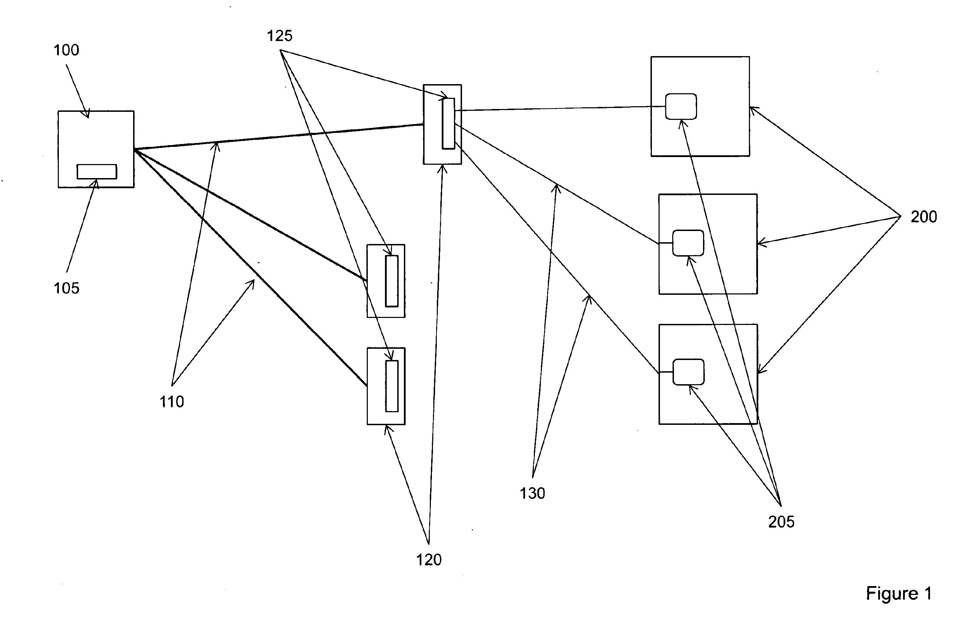

Figure 1 shows a schematic depiction of a FTTCab network in which a telephone exchange 100 is connected to a plurality of cabinets 120 by optical fibre cables 110. These cabinets 120 comprise the opto-electronic equipment necessary to send data to the customer premises 200 over a copper cable 130. Typically, a customer will use the communications network to access the internet and to access data such as video on demand services. Alternatively, the network may be used to transmit television channels which might conventionally be transmitted using a terrestrial or satellite transmission channel.

Each of the cabinets will comprise a DSLAM (Digital Subscriber Line Add/Drop Multiplexor) which will receive the data transmitted over the optical fibre cables 110 and will separate the traffic so that data transmitted to a particular customer will be transmitted via the port associated with that customer, over a copper cable 130. The data may be transmitted over the copper cable using a VDSL transmission scheme, which enables data rates of up to 80 Mb/s. At the customer premises a CPE (Customer Premises Equipment) device, such as a modem, is able to receive and demodulate the VDSL signals. Data sent by the customer will be similarly modulated as a VDSL signal and transmitted back to the DSLAM for onward transmission.

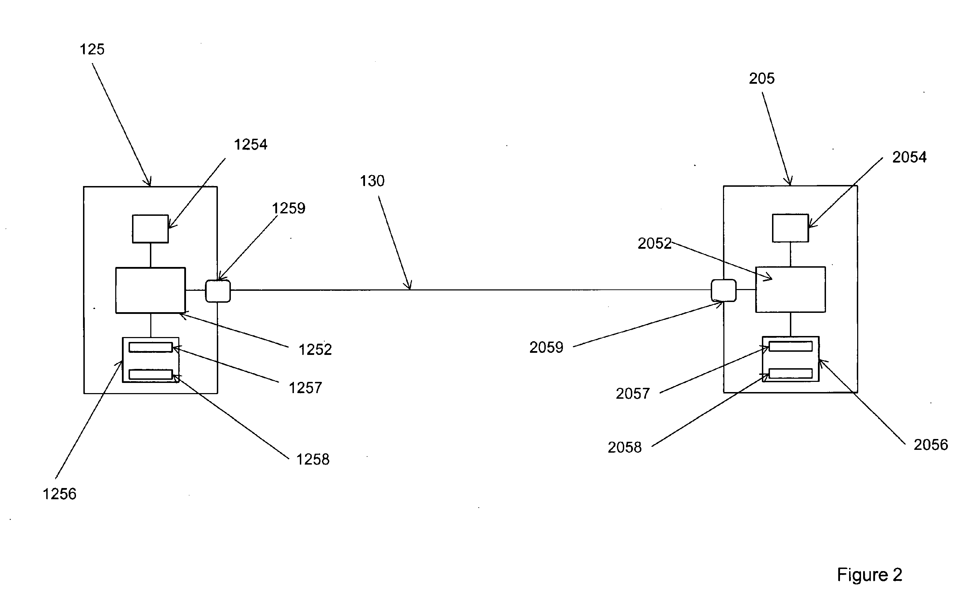

Figure 2 shows a schematic depiction of a DSLAM 125 connected to CPE 205 via a copper cable 130. It will be understood that the DSLAM comprises other components and performs further functions but these will not be referred to with respect to Figure 2 as they are not relevant to the teaching of the present invention. Similarly, the further functionality of the CPE will not be discussed as it is not relevant to the present invention.

DSLAM 125 comprises CPU 1252, volatile data store 1254 and non-volatile data store 1256. Non-volatile data store 1256 comprises one or more computer programs 1257 which are executed by the CPU to provide the functionality of the DSLAM. Furthermore, the non-volatile data store 1256 comprises data parameter storage 1258. Data parameters which are required for the operation of the DSLAM, or are required for reporting to other network entities are held within this storage. The DSLAM further comprises network interface 1259: data to be transmitted to the CPE is routed to the network interface 1259, which is coupled to the copper cable 130.

Similarly, CPE 205 comprises CPU 2052, volatile data store 2054 and non-volatile data store 2056. Non-volatile data store 2056 comprises one or more computer programs 2057 which are executed by the CPU to provide the functionality of the CPE. Furthermore, the non-volatile data store 2056 comprises data parameter storage 2058. Data parameters which are required for the operation of the CPE, or are required for reporting to other network entities are held within this storage. The CPE further comprises network interface 2059: data to be transmitted to the DSLAM is routed to the network interface 2059, which is coupled to the copper cable 130.

A network operator will wish to provide customers with robust, high performance services. That is, customers wish to receive as a high a data rate as is possible without transmission errors affecting the contents of the transmitted packets, If a customer is streaming audio or video then excessive packet loss can lead to media buffering and a stuttering playback of the media. Such an outcome is to be avoided if possible. DSL systems work by utilising the frequencies above those which are used by the conventional telephony signals. In particular, VDSL2 defines three frequency windows for downstream data and two frequency windows for upstream data. Each of these windows comprises a number of carriers which have a 4.3125 kHz frequency separation. Each of these carriers will transmit one or more symbols with each of these symbols being used to transmit up to 15 bits of data.

During a training process the DSLAM and the CPE will transmit a number of signals over the copper cable and will carry out a number of measurements on the received signals. The insertion loss and noise level are determined for each of the carriers such that the signal to noise ratio (SNR) for each carrier can be determined. The SNR value determines the number of symbols which can be transmitted using a given carrier. Thus, the training process determines the capacity of the upstream and downstream links in accordance with the SNRs of each of the carriers. As a rough rule of thumb, for each 3dB of margin, an additional symbol may be transmitted over a given channel.

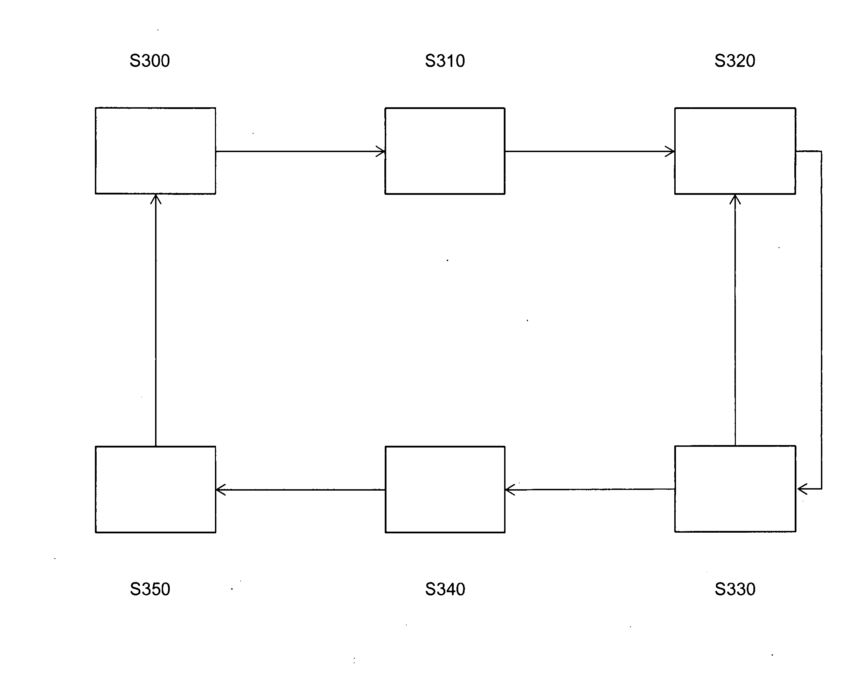

Figure 3 shows a graphical depiction of a flowchart which describes the operation of a method according to the present invention. At step S300 a value of the expected minimum reference margin (EMRM) is determined for each of the plurality of channels that are used in the transmission link. If the method according to the present invention has been used previously then the previously determined EMRM values may be used. Alternatively, EMRM values may be estimated or the EMRM values may be set to a predetermined value (which may vary from channel to channel).

The EMRM value is the predicted near worst case SNR margin that can be expected to be evident at some point in the temporal evolution of the noise environment. It is defined with respect to a bit loading of 1 bit per channel with a specific target maximum error rate or equivalent packet loss probability, for example the loss of one 1500 byte packet per 4 hour time period. Noise is present in DSL links due to cross-talk from other copper cables which connect to the DSLAM.

Furthermore, it is known that other forms of interference can have a significant deleterious effect on DSL performance. For example, AM transmissions, domestic heating controllers, ship-to-shore radio systems and powerline adaptors have all been identified as causes of interference which can lead to unwanted noise in the DSL transmission windows. Furthermore, as these causes of interference are often intermittent or sporadic, it is possible that they may not be present when the line undergoes training so that the line is not resilient to the effects of the interference.

During the line training, as discussed above, a the number of bits to be transmitted over the different channels in the transmission links is determined. The EMRM determined in step S300 is defined with respect to the use of 1 bit per channel. At step S310 the excess margin required (EMR) to transmit the required number of bits at the target error frequency is determined for each of the channels.

During transmission a current reference margin (CRM) value is determined for each of the channels in use (step S320). The CRM is calculated as the current estimate of the SNR margin (which is monitored as a part of normal operations) plus the EMR for each of the channels. At step S330 the value of CRM is compared with EMRM for each of the channels.

If CRM is equal to or greater than EMRM for a given channel then the noise and interference present in that channel is not sufficient to breach the desired error rate for that channel. In such a case then the process returns to step S320 such that a further CRM value is generated. In a stable communications link which is not affected by time varying interference then process will loop between steps S320 and S330.

If CRM is less than EMRM for a given channel then the noise and interference in that channel is likely to lead to unacceptable levels of errors. In such a case an EMRM correction signal is generated at S340, with the magnitude of the EMRM correction signal being proportional to the magnitude of the difference between the EMRM value and the CRM value for that channel. Preferably, the EMRM correction signal is generated by subtracting the CRM value from the EMRM value for a given channel. Subsequently at S350 the EMRM correction signal is processed using a fast decay slow attack integrating filter to produce an EMRM parameter for a given channel.

The EMRM parameter can then be fed back to step S300 for use in determining a subsequent EMRM value for that channel. A channel for which an EMRM parameter is generated is one that is effected by external noise and interference to an undesired level. The value of the EMRM parameter causes the EMRM value determined in step S300 to be increased.

Periodically, and/or whenever the line retrains, the EMRM value for each channel is used to calculate a hypothetical equivalent noise level (HENL) per channel which is the minimum of the actual received noise level, and the actual received signal level minus the sum of the EMRM parameter and the minimum SNR needed to carry one bit on a channel. Such a mechanism prevents the temporary low noise levels present in some regions of the transmission windows from being exploited. Thus, it is possible to take account of noise which is likely to be present during operation but which may not be present during the training process.

If seamless rate allocation (SRA) is enabled then the EMRM value can be used during a retrain to define a equivalent virtual noise profile to constrain bit allocation to problematic channels.

It will be understood by the person skilled in the art that the an apparatus according to the present invention may be implemented in hardware alone, in a combination of hardware and software, or in software alone, as is described above. It will be readily appreciated that this will have no effect on the implementation of the present invention.

As the present invention may be implemented on software within a modem (or router), it may be possible to upgrade a conventional modem (or router) to one which can perform a method according to the present invention. Computer code may be deployed to a modem (or router) via download, for example via the internet, or on some physical media, for example, DVD, CD-ROM, USB memory stick, etc. for which the wireless access point has an appropriate media reader. In an alternative embodiment, the control functionality might be virtualised so as to be implemented in the "cloud".

In summary, the present invention provides a method of determining an expected minimum reference margin for each of the plurality of channels in a communications link, for example a DSL link. By comparing this expected minimum reference margin with the current reference margin it is possible to determine if external noise and interference is likely to lead to unacceptable errors or packet losses for one or more of the channels. The number of bits assigned to those channels may be varied to mitigate the effect of the external interference.

## Claims

1. A method of operating a communications network, the method comprising the steps of:
a) receiving a signal from a communications link, the signal comprising a plurality of channels;
b) determining an expected signal to noise ratio (SNR) margin value for each of the plurality of channels;
c) measuring the SNR for each of the plurality of channels; and
d) generating a correction signal for each channels where the measured SNR value is less than the SNR margin value.

2. A method according to Claim 1 wherein in step b) the expected SNR margin value is determined on the basis that a single bit is transmitted over each of the plurality of channels.

3. A method according to Claim 2 comprising the further step of
e) adjusting the expected SNR margin value in accordance with the number of bits transmitted over each of the plurality of channels, wherein step e) is performed after step b) and before step c).

4. A method according to any preceding Claim wherein the correction signal comprises the difference between the SNR margin value and the measured SNR value.

5. A method according to any preceding Claim wherein the correction signal is used to vary the expected SNR margin value for the associated channel.

6. A method according to Claim 1 wherein steps a) to d) are performed by a first apparatus and the method comprises the further step of:
e) transmitting the correction signal to a second apparatus, the first apparatus being connected to the second apparatus by the communications link.

7. An apparatus configured, in use, to
receive a signal from a communications network, the signal comprising a plurality of channels;
determine a signal to noise ratio (SNR) margin value for each of the plurality of channels;
measure the SNR for each of the plurality of channels; and
generate a correction signal for each channel where the SNR is less than the SNR margin value.

8. An apparatus according to Claim 7, wherein the apparatus comprises customer premises equipment or a Digital Subscriber Line Add/Drop Multiplexor.

9. A tangible data carrier for use in a computing device, the data carrier comprising computer executable code which, in use, performs a method according to any of Claims 1 to 6.
